# EUROPÄISCHE PATENTSCHRIFT

(11) **EP 1 342 892 B1**
(45) Veröffentlichungstag und Bekanntmachung des Hinweises auf die Patenterteilung: **01.09.2010**
(21) Anmeldenummer: 03003992.9
(22) Anmeldetag: 24.02.2003
(51) Int. Cl.: F02B 29/04, F02B 37/00, F01P 9/06

(54) **Kreislauf zur Kühlung von Ladeluft und Verfahren zum Betreiben eines derartigen Kreislaufs**
Circuit for cooling charge air and method to operate such circuit
Circuit pour refroidissement de l'air d'alimentation et méthode d'opération d'un tel circuit

(30) Priorität: 08.03.2002 DE 10210132
(43) Veröffentlichungstag der Anmeldung: 10.09.2003
(73) Patentinhaber: Behr GmbH & Co. KG, 70469 Stuttgart (DE)
(72) Erfinder: Geskes, Peter, Dr., 70469 Stuttgart (DE)
(74) Vertreter: Grauel, Andreas

(56) Entgegenhaltungen:
- DE-A1- 19 834 135
- GB-A- 2 129 055
- US-A- 4 485 624
- US-A- 5 269 143
- US-A- 5 394 854
- US-A- 6 006 540

## Beschreibung

Die Erfindung betrifft einen Kreislauf zur Kühlung von Ladeluft bei einem Kraftfahrzeug mit einem Turbolader gemäß dem Oberbegriff des Anspruchs 1.

Gemäß dem Stand der Technik werden zur Leistungssteigerung von Motoren Turbolader zur Verdichtung der Luft verwendet. Hierbei erfolgt jedoch eine Erwärmung der Luft, im Folgenden als Ladeluft bezeichnet, in Folge der Kompression im Turbolader auf Temperaturen von über 150°C. Um eine derartige Lufterwärmung zu vermindern, werden Luftkühler verwendet, die vorne im Kühlmodul angeordnet sind und zur Kühlung der Ladeluft dienen. Die Ladeluft strömt dabei durch einen Wärmeübertrager, der von Umgebungsluft durchströmt und damit gekühlt wird. Dadurch ist eine Abkühlung der Ladeluft auf eine Temperatur möglich, die etwa 40-80 K über der Temperatur der Umgebungsluft liegt.

Ferner ist bekannt, dass die Kühlung der Ladeluft über einen Kühlmittelkreislauf erfolgt. Hierbei strömt die Ladeluft motornah durch einen kühlmittelbeaufschlagten Luftkühler, in dem die Wärme an das Kühlmittel übertragen wird. Das Kühlmittel wird durch einen Luft-/Kühlmittelkühler gepumpt, der im vorderen Kühlmodul des Fahrzeuges angeordnet ist. Dort wird die Wärme an die Umgebungsluft abgegeben, wodurch die kühlmittelgekühlte Ladeluft-Kühlung einen höheren Wirkungsgrad als die luftgekühlte Ladeluft-Kühlung aufweist.

Es ist Aufgabe der Erfindung, einen Kreislauf der eingangs genannten Art zu verbessern.

Diese Aufgabe wird gelöst durch einen Kreislauf mit den Merkmalen des Anspruchs 1.

Erfindungsgemäß wird bei einem Kreislauf, d.h. einem Kühlmittel- und/oder Kältemittelkreislauf, zur Kühlung von Ladeluft bei einem Kraftfahrzeug mit einem Turbolader eine zweite Kühlstufe vorgesehen. Durch eine derartige zweite Kühlstufe ist eine effektivere Kühlung der Ladeluft möglich. Die auf diese Weise stärker abgekühlte Ladeluft führt zu einer Leistungssteigerung des Motors, da bei hohen Drehzahlen die Klimatisierungsleistung der Klimaanlage für den Innenraum nicht im vollen Umfang benötigt wird. Die Absenkung der Ladelufttemperatur auf eine Temperatur unter der Umgebungslufttemperatur führt zu einer verringerten NOx-Bildung, da die Verbrennungstemperatur abgesenkt werden kann, so dass sich auch Vorteile in Hinblick auf die Umwelt ergeben. Als Nebeneffekt kann die Wärme der Ladeluft bspw. zur Beheizung des Fahrzeuginnenraumes verwendet werden.

Dabei wird ein Kühlmittelkreislauf mit einem Kühler zur Kühlung von Ladeluft vorgesehen bei dem der Kühlmittelkreislauf einen Verdampfer aufweist, welcher Teil eines Kältemittelkreislaufs ist. Vorzugsweise ist der Kältemittelkreislauf Teil einer Klimaanlage. Dabei wird das Kühlmittel über den Kältemittelkreislauf auf ein niedriges Temperaturniveau gebracht. Der zusätzliche Verdampfer kann auf relativ einfache Weise in bestehende Kreisläufe eingebaut werden.

Vorzugsweise ist vor dem Verdampfer ein Kühler, worin Kühlmittel von der Umgebungsluft (vor-)gekühlt wird, und nach dem Verdampfer der Kühler für die Ladeluft angeordnet.

Vorzugsweise ist der Verdampfer an einem Bypass des Kältemittelkreislaufs angeordnet, welcher parallel zum Verdampfer der Klimaanlage angeordnet ist. Der Bypass weist vorzugsweise ein Expansionsventil auf, ebenso wie der hierzu parallele Teil der Hauptleitung.

Gemäß einer bevorzugten Ausführungsform ist im Kühlmittelkreislauf ein Bevorratungsbehälter angeordnet, in dem abgekühltes Kühlmittel gespeichert werden kann, um instationäre Brems- und Beschleunigungsvorgänge auszugleichen, da der Kältemittel-Kompressor mit der Motordrehzahl gekoppelt ist.

Im folgenden wird die Erfindung anhand einiger Ausführungsbeispiele unter Bezugnahme auf die Zeichnung im Einzelnen erläutert. In der Zeichnung zeigen:
- Fig. 1: einen Kreislauf zur Ladeluftkühlung gemäß dem ersten Ausführungsbeispiel, und
- Fig. 2: einen Kreislauf zur Ladeluftkühlung gemäß dem zweiten Ausführungsbeispiel.

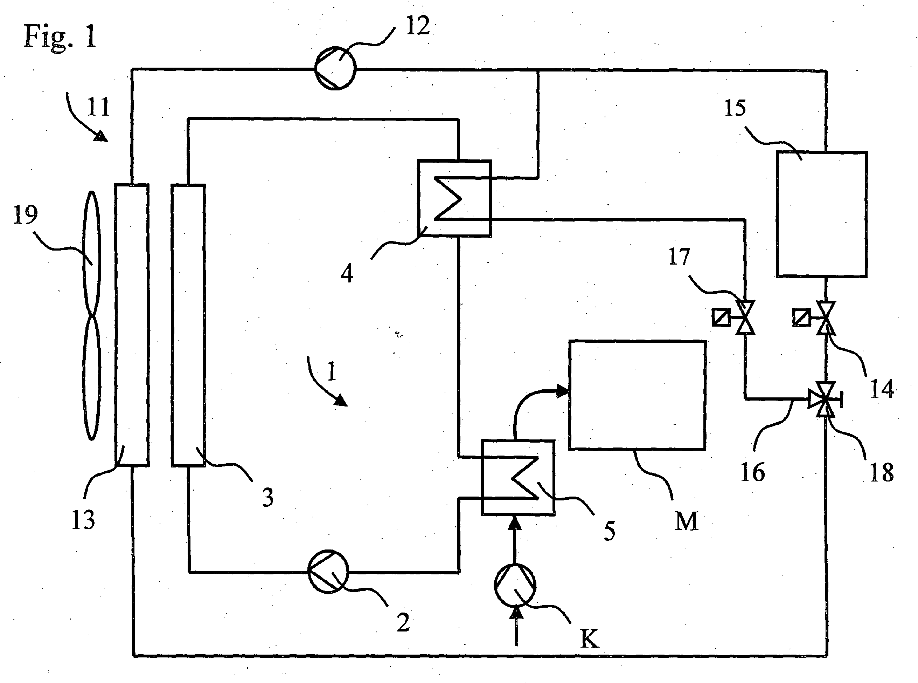

Fig. 1 zeigt ein erstes Ausführungsbeispiel, bei dem ein Kühlmittelkreislauf 1 mit einem Kühlmittel vorgesehen ist, welcher eine das Kühlmittel im Kühlmittelkreislauf 1 antreibende Kühlmittel-Pumpe 2, einen Kühler 3, einen Kühlmittel/Kältemittel-Verdampfer 4 und einen Kühlmittel/Ladeluft-Kühler 5 aufweist, wobei das Kühlmittel die einzelnen Stationen in der oben genannten Reihenfolge durchströmt. Hierbei wird das Kühlmittel im Kühler 3 von der Umgebungsluft gekühlt, bevor es im Kühlmittel/Kältemittel-Verdampfer 4 noch weiter abgekühlt wird, vorzugsweise zwischen 5 und 25°C, um im Kühlmittel/Ladeluft-Kühler 5 der mit Hilfe eines Kompressors K komprimierten Ladeluft Wärme zu entziehen, bevor diese dem Motor M zugeführt wird.

Ferner ist ein Kältemittelkreislauf 11 vorgesehen, welcher seinerseits einen das Kältemittel im Kältemittelkreislauf 11 antreibenden Kältemittel-Kompressor 12, einen Kondensator 13, welcher mit dem Kühler 3 des Kühlmittelkreislaufs 1 zusammenwirkt, einem Expansionsventil 14 und einem Klima-Verdampfer 15 aufweist. Ferner ist ein Bypass 16 vorgesehen, welcher ein zweites Expansionsventil 17 aufweist und durch den Kühlmittel/Kältemittel-Verdampfer 4 zurück zum Kältemittel-Kompressor 12 führt. Die Regelung des durch Kältemittels erfolgt mittels eines an der Abzweigung des Bypasses 16 angeordneten Ventils 18. Alternativ können auch vor oder nach den beiden Expansionsventilen 14, 17 ansteuerbare Ventile vorgesehen sein, um einen der beiden parallel geschalteten Verdampfer zu- oder abschalten bzw. drosseln zu können. Gemäß dem vorliegenden Ausführungsbeispiel strömt das Kältemittel ausgehend von dem Kältemittel-Kompressor 12 zum Kondensator 13, wo das Kältemittel mit Hilfe der Umgebungsluft abgekühlt wird. Anschließend gelangt das Kältemittel zum Ventil 18 von dem es aus zum ersten Expansionsventil 14 und zum Klima-Verdampfer 15 oder, je nach Stellung des Ventils 18, über den Bypass 16, d.h. das zweite Expansionsventil 17 und den Kühlmittel/Kältemittel-Verdampfer 4, gelangt und der Bypass 16 wieder der Hauptleitung zugeführt wird.

Die beiden Verdampfer 4 und 5 sind parallel zueinander angeordnet und lassen sich einzeln zu- oder abschalten. Ferner lässt sich die eingespritzte Kältemittelmenge im Kältemittelkreislauf 11 über die Expansionsventile 14 und 17 regeln. Anstelle von Expansionsventilen können bspw. auch Festdrosseln (orifice tubes) eingesetzt werden. Der Kondensator 13 und der Kühler 3 werden über einen Lüfter 19 von Luft durchströmt.

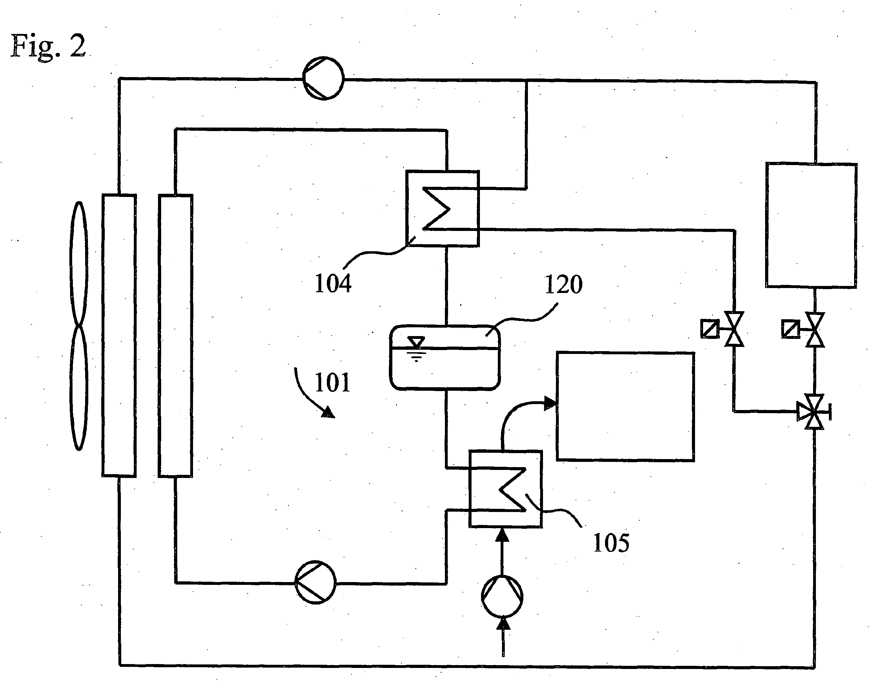

Das in Fig. 2 dargestellte zweite Ausführungsbeispiel stimmt im wesentlichen mit dem ersten Ausführungsbeispiel überein, so dass gleiche oder gleichwirkende Elemente mit um 100 höheren Bezugszeichen versehen sind.

Gemäß dem zweiten Ausführungsbeispiel ist - als einziger Unterschied zum ersten Ausführungsbeispiel - im Kühlmittelkreislauf 101 nach dem Kühlmittel/Kältemittel-Verdampfer 104 und vor dem Kühlmittel/Ladeluft-Kühler 105 ein Bevorratungsbehälter 120 vorgesehen, welcher zur Speicherung von kaltem Kühlmittel dient.

## Patentansprüche

1. Kreislauf zur Kühlung von Ladeluft bei einem Kraftfahrzeug mit einem Turbolader, wobei der Kreislauf einen Kühlmittelkreislauf (1; 101) und einen Kältemittelkreislauf (11) aufweist, wobei im Kühmittelkreislauf (1:101) eine erste Kühlstufe (3) in Form eines Kühlmittel/Luft- Kühlers (3) welcher das Kühlmittel Kühlt sowie eine zweite Kühlstufein Form eines Kühlmittel/Kältemittel-Verdampfers (4; 104; 204; 304) welcher gleichzeitig Teil des Kältemittel Kreislaufs (11) ist, vorgeshen ist und wobei das Kühlmittel zweist inder ersten Kühlstüfe gekühlt wird und danach in der zweiten Kühlstüfe gekühlt wird, und wobei Kühlmittelkreislauf (1; 101) ein Ladeluft Kühler (5), welcher die Ladeluft kühlt, nach dem Verdampfer (4; 104) angeordnet ist.

2. Kreislauf nach einem der vorhergehenden Ansprüche, **dadurch gekennzeichnet, dass** vor dem Verdampfer (4; 104) ein Kühler (3; ) angeordnet ist.

3. Kreislauf , nach einem der vorhergehenden Ansprüche, **dadurch gekennzeichnet, dass** der Verdampfer (4; 104) an einem Bypass (16) des Kältemittelkreislaufs (11) angeordnet ist.

4. Kreislauf nach Anspruch 3, **dadurch gekennzeichnet, dass** der Bypass (16) ein Expansionsventil (17) aufweist.

5. Kreislauf nach einem der vorhergehenden Ansprüche, **dadurch** Kreislauf, dass im Kühlmittelkreislauf (101;) ein Bevorratungsbehälter (120) angeordnet ist.

6. Kreislauf nach einem der vorergehenden Ansprüche, **dadurch gekennzeichnet, dass** der Kühlmittelkreislauf einen Wärmetauscher durchströmt, der Teil eines Kreislauf zur Kühlung eines Motors (M) ist.

## Claims

1. A circuit for cooling charge air in a motor vehicle comprising a turbocharger, wherein the circuit includes a coolant circuit (1; 101) and a refrigerant circuit (11), wherein the coolant circuit (1; 101) includes a first cooling stage (3) in the form of a coolant/air cooler (3) which cools the coolant, and a second cooling stage in the form of a coolant/refrigerant evaporator (4; 104; 204; 304) which is simultaneously part of the refrigerant circuit (11), and wherein the coolant is first cooled in the first cooling stage and is subsequently cooled in the second cooling stage, and wherein a charge air cooler (5) that cools the charge air is situated in the coolant circuit (1; 101) after the evaporator (4; 104).

2. The circuit according to one of the preceding claims, **characterized in that** a radiator (3) is situated in front of the evaporator (4; 104).

3. The circuit according to one of the preceding claims, **characterized in that** the evaporator (4; 104) is situated on a bypass (16) of the refrigerant circuit (11).

4. The circuit according to claim 3, **characterized in that** the bypass (16) includes an expansion valve (17).

5. The circuit according to one of the preceding claims, **characterized in that** a supply tank (120) is situated in the coolant circuit (101).

6. The circuit according to one of the preceding claims, **characterized in that** the coolant circuit flows through a heat exchanger which is part of a circuit for cooling an engine (M).

## Revendications

1. Circuit de refroidissement d'air de suralimentation pour un véhicule automobile équipé d'un turbocompresseur, où le circuit présente un circuit de liquide de refroidissement (1 ; 101) et un circuit de fluide frigorigène (11), où il est prévu, dans le circuit de liquide de refroidissement (1 ; 101), un premier étage de refroidissement (3) se présentant sous la forme d'un refroidisseur (3) de liquide de refroidissement / d'air qui refroidit le liquide de refroidissement, ainsi qu'un deuxième étage de refroidissement se présentant sous la forme d'un évaporateur (4 ; 104 ; 204 ; 304) de liquide de refroidissement / de fluide frigorigène qui fait partie, en même temps, du circuit de fluide frigorigène (11), et où le liquide de refroidissement est refroidi d'abord au niveau du premier étage de refroidissement et, ensuite, est refroidi au niveau du deuxième étage de refroidissement, et où un refroidisseur d'air de suralimentation (5), qui refroidit l'air de suralimentation, est disposé en aval de l'évaporateur (4 ; 104) dans le circuit de liquide de refroidissement (1 ; 101).

2. Circuit selon la revendication 1, **caractérisé en qu'**un refroidisseur (3) est disposé en amont de l'évaporateur (4 ; 104).

3. Circuit selon la revendication 1 ou 2, **caractérisé en ce que** l'évaporateur (4 ; 104) est disposé au niveau d'une dérivation (16) du circuit de fluide frigorigène (11).

4. Circuit selon la revendication 3, **caractérisé en ce que** la dérivation (16) est un détendeur (17).

5. Circuit selon l'une quelconque des revendications précédentes, **caractérisé en ce qu'**un réservoir de stockage (120) est disposé dans le circuit de liquide de refroidissement (101).

6. Circuit selon l'une quelconque des revendications précédentes, **caractérisé en ce que** le circuit de liquide de refroidissement traverse un échangeur de chaleur qui fait partie d'un circuit servant au refroidissement d'un moteur (M).
